# EUROPÄISCHE PATENTSCHRIFT

(11) **EP 0 942 219 B1**
(45) Veröffentlichungstag und Bekanntmachung des Hinweises auf die Patenterteilung: **28.02.2001**
(21) Anmeldenummer: 99112592.3
(22) Anmeldetag: 18.05.1998
(51) Int. Cl.: F16L 33/207

(54) **Verpressbare Rohrverbindung**
Compression fitting for pipes
Raccords à compression pour tuyaux

(30) Priorität: 20.05.1997 DE 19721078
(43) Veröffentlichungstag der Anmeldung: 15.09.1999
(62) Teilanmeldung aus: 98890144.3
(73) Patentinhaber: Herz Armaturen Ges.m.b.H., 1232 Wien (AT)
(72) Erfinder: Jäggi, Georg, 2572 Kaumberg (AT)
(74) Vertreter: Patentanwälte Leinweber & Zimmermann

(56) Entgegenhaltungen:
- EP-A- 0 555 650
- EP-A- 0 589 413
- WO-A-92/09840
- DE-U- 29 503 019
- DE-U- 29 621 271

## Beschreibung

Die Erfindung betrifft eine Vorichtung zum Herstellen einer verpreßbaren Rohrverbindung nach dem Oberbegriff des Patentanspruchs 1.

Rohrverbindungen im Installationsbereich, z.B. bei Zentralheizungen werden verschraubt und mit Hanf oder Siliconband gedichtet oder verschweißt. Auch die Verbindungen zu Armaturen und Fittings wurden auf diese Weise hergestellt. Eine moderne Alternative stellen Preßverbindungen dar. Das Ende eines Installationsrohres (meist aus Kunststoff-Metall Verbundmaterial) wird über einen Anschlußstutzen eines Fittings geschoben. Eine konzentrische, dem Rohr überschobene Preßhülse wird über jenem . Rohrbereich positioniert, der im zusammengesteckten Zustand über dem Anschlußstutzen liegt und dann wird die Preßhülse mittels einer Preßzange gequetscht. Preßbacken der Preßzange bewirken eine lokale Querschnittsverkleinerung beispielsweise in zwei im axialen Abstand liegenden Zonen. Durch Anschläge oder Positionsmarken erfolgt das Verpressen derart, daß die als Preßmarken oder Preßflächen auftretenden sichtbaren Verformungen über einen strukturierten Bereich des Anschlußstutzens des Fittings liegen. Dadurch erfolgt eine mechanische Verbindung, die Zugkräfte aufnimmt. Meist ist im unverpreßten Bereich der Rohrverbindung zwischen dem Rohr und dem Rohrstutzen in einer Ringnut desselben ein O-Ring vorgesehen; dieser legt sich elastisch an die Rohrinnenwand an, wobei sich die Dichtwirkung mit zunehmendem Wasserdruck erhöht. Daneben sind aus der DE-U-295 03 019 aber auch Rohrverbindungen bekannt, bei denen eine dichte Rohrverbindung ohne Verwendung von O-Ringen bewirkt wird.

Wenngleich verpreßbare Rohrverbindungen der vorgenannten Art in den meisten Betriebsfällen zu zufriedenstellenden Ergebnissen führen, haben Untersuchungen gezeigt, daß die unterschiedlichen Materialien des Fittings einerseits und des Kunststoff-Metall Verbundstoffes des Installationsrohres andererseits unterschiedliche Dehnungen an den Dichtflächen hervorrufen. Ferner sind O-Ringe bei geringer Druckbelastung durch das abzudichtende Medium, also z.B. Wasser, nicht dicht. Wenn also besondere Umstände hinsichtlich Temperatur und Druck zusammentreffen, dann kann es mit herkömmlichen verpreßten Rohrverbindungen zu Schwierigkeiten kommen.

Die Erfindung zielt darauf ab, eine Rohrverbindung der eingangs beschriebenen Art so zu verbessern, daß auch bei Temperatur- und Druckwerten, die den Nennwerten bei normalem Betrieb nicht entsprechen, eine einwandfreie Dichtwirkung gegeben ist. Das wird durch die im kennzeichnenden Teil des beigefügten Patentanspruchs 1 angegebene Weiterbildung der beispielsweise aus der EP-A-589 413 bekannten herkömmlichen Rohrverbindungen erreicht. Dabei ist vorgesehen, daß mindestens ein O-Ring unter einer Preßfläche bzw. unmittelbar neben einer Preßfläche oder unmittelbar zwischen zwei Preßflächen in der Preßhülse oder im Installationsrohr angeordnet ist und der Anpreßdruck unter der Preßfläche der zulässigen Verformung des O-Ringes entspricht. Die Verpressung erfolgt somit zusätzlich auch im Bereich mindestens eines O-Ringes bzw. es wird ein O-Ring in einen Bereich des Anschlußstutzens des Fittings gesetzt, in welchem die Preßzange die Preßhülse und bzw. oder das Installationsrohr im Querschnitt verjüngt. Letztere konstruktive Anpassung an die Preßzonen der Preßzange sind im Hinblick auf die große Zahl der bei Installationsfirmen in Verwendung stehenden Preßzangen zweckmäßig. Wesentlich ist, daß die Funktion des verpreßten O-Ringes erhalten bleibt und somit seine zulässigen Verformungsgrenzen (z.B. 15%) nicht überschritten werden. Die Materialverformung des Installationsrohres darf nicht zu einem Einfließen des Materials in die Ringnut des O-Ringes führen, da sonst eine Behinderung des O-Ringes in seiner Dichtwirkung erfolgt. Die Rohrverbindung nimmt durch die Verpressung im gerillten Bereich des Rohrstutzens mechanische Zugbeanspruchungen auf und gewährleistet durch die Verpressung des O-Ringes innerhalb der Grenzen der zulässigen Verformung desselben eine verbesserte Dichtwirkung, insbesondere bei niederen Drücken. Beim Verpressen ist es irrelevant, ob die Preßbacken der Preßzange eine oder mehrere durchgehende Ringflächen von beispielsweise 8 mm Breite aufweisen, oder ob die Preßflächen in radiale, im Umfang voneinander distanzierte, beispielsweise quadratische Einzelflächen aufgelöst sind oder ob zum Verpressen parallele Ringwulste, allenfalls mit dreieckigem Querschnitt in Preßzonen nebeneinanderliegend vorgesehen sind. Der O-Ring kann auch einer Preßwirkung dadurch unterliegen, daß die Preßflächen unmittelbar neben dem O-Ring liegen. Auch in diesem Fall kann eine entsprechende Verformung ohne Materialfluß in die Nut des O-Ringes und somit ohne Behinderung des O-Ringes erfolgen.

In Ausgestaltung der Erfindung ist es besonders zweckmäßig, wenn zwischen dem verpreßten O-Ring und der verpreßten Oberflächenstruktur (Ringnuten) des Anschlußstutzens ein weiterer O-Ring, vorzugsweise unverpreßt und elastisch verformbar angeordnet ist. Der verpreßte O-Ring dichtet bei Kaltwasser im Temperaturbereich unter 20°C und bei Druckwerten unter 2 bar. Der nicht einer zusätzlichen Pressung unterworfene O-Ring wirkt dichtend, sobald Betriebsdruck auftritt - z.B. bei 6 bar und übernimmt die Dichtungseigenschaften auch bei höheren Temperaturen somit auch bei 90°C.

Die Kombination eines zusätzlich verpreßten O-Ringes mit einem nicht der Verpressung unterliegenden O-Ringes und mit einer verpreßten strukturierten Zone ergibt Dichtheit in allen Bereichen und mechanische Festigkeit gegen Zugbeanspruchung.

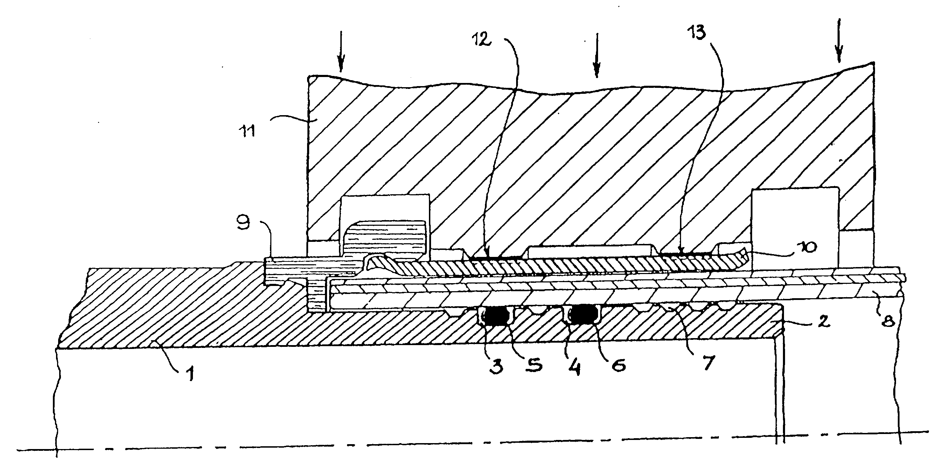

Ein Ausführungsbeispiel einer erfindungsgemäß verpreßbaren Rohrverbindung ist in der Zeichnung schematisch im Schnitt dargestellt.

Ein Rohrfitting 1 weist an seinem rohrseitigen Ende einen Anschlußstutzen 2 auf. Dieser trägt zwei Ringnuten 3, 4 für jeweils einen O-Ring 5, 6. Die Ringnut 3 ist beiderseits von Ringnuten begrenzt. Ferner endet der Anschlußstutzen 2 in einem durch Ringnuten 7 strukturierten Bereich. Auf den Anschlußstutzen 2 ist ein Installationsrohr 8 aufgeschoben. Dabei handelt es sich um ein Aluminiumrohr mit beiderseitiger Kunststoffbeschichtung oder um ein Kunststoffrohr mit Metalleinlage oder allenfalls um ein Aluminiumrohr ohne besondere Beschichtung. Das Aufschieben wird durch einen Schnappring 9 begrenzt, der einerseits Durchbrüche aufweist oder aus durchsichtigem Material besteht, um das vollständige Ein- bzw. Aufschieben des Installationsrohres 8 überprüfen zu können und der andererseits einen Kontakt zwischen dem Aluminiumkern in der Rohrwand und dem Fitting, z.B. aus Messing verhindert. Damit wird einer Korrosion infolge elektrischer Spannungen vorgebeugt. In den Schnappring 9 schnappt eine Preßhülse 10 ein, die die Rohrverbindung manschettenartig umgibt.

Eine Preßzange weist mehrere Preßbacken auf, die in einer Zangebewegung radial gegen die Preßhülse 10 geführt werden um dort örtlich den Querschnitt zu verjüngen und damit eine Preßverbindung herzustellen. Die Figur zeigt eine Preßbacke 11 im Querschnitt mit zwei ringsegmentförmigen Preßflächen 12, 13 vor dem Preßvorgang. Nach dem Verpressen sind die Preßflächen 12, 13 als Negativ in die Preßhülse 10 eingedrückt. Diese bleibenden Einschnürungen wirken auf das Installationsrohr 8 und letzteres verformt den O-Ring 5 zusätzlich zu der Verformung in der Ausgangslage (Basisverformung). Die endgültige Verformung bleibt in den Grenzen der für die Funktion des O-Ringes gemäß der Norm vorgeschriebenen Werte. Es fließt Material des Installationsrohres 9 in die Ringnuten, die unter den Randbereichen der Preßfläche 12 liegen. Die Nut 3 selbst bleibt frei von verformtem Material, sodaß der Wirkungsbereich des 0-Ringes 5 nicht eingeschränkt ist.

Die Positionierung der Preßbacken 11 erfolgt durch den Kragen des Schnappringes 9, der in einer tiefen Ringnut der Preßbacken 11 zu liegen kommt. Die Preßbacken sind symmetrisch ausgebildet, sodaß das Preßwerkzeug bzw. die Preßzange links und rechts verwendet werden kann.

Die Preßfläche 13 der Preßbacke 11 bzw. die als Negativ in der Preßhülse 10 ausgeprägte Preßfläche drückt das Installationsrohr 8 irreversibel in die Oberflächenstruktur, also in die Ringnuten 7 des Rohrstutzens 2. Dadurch entsteht eine erhöhte Haltekraft und eine besondere Widerstandsfähigkeit der Rohrverbindung gegen Zugbeanspruchungen.

Zwischen den beiden Preßflächen 12 udn 13 liegt der O-Ring 6. Seine Verformung wird nicht durch eine zusätzliche Durchmessereinschnürung des Installationsrohres 8 verstärkt ausgeprägt. Vielmehr befindet sich der O-Ring 6 in der normgemäßen Basisverformung.

Wasser unter Betriebsdruck und mit hoher Temperatur (z.B. in einem Zentralheizungssystem) diffundiert durch die mechanische Preßverbindung im Bereich der Ringnuten 7 unter der Preßfläche 13. Infolge des hohen Druckes wird der O-Ring 6 so verformt, daß er zuverlässig dichtet. Der O-Ring 5 bleibt - von statistischen Leckmengen abgesehen - funktionslos. Bei niederem Druck und kaltem Wasser tritt die Dichtwirkung des O-Ringes 6 nicht ein. Der O-Ring 5 übernimmt für diesen Zustand einer Anlage die wirksame Abdichtung.

Allenfalls kann auch der O-Ring 6 unter einer Preßfläche liegen. Es würde dadurch eine noch bessere Abdichtung für den Betriebsfall erfolgen. Wenn aber Phasen mit geringem Druck und Kaltwassertemperatur mit Betriebsphasen von höheren Drücken und Temperauren wecheln, dann liefert die Ausführung gemäß dem Ausführungsbeispiel die besten Ergebnisse.

## Patentansprüche

1. Vorrichtung zum Herstellen einer verpreßbaren Rohrverbindung zwischen einem Anschlußstutzen eines Rohrfittings und einem Installationsrohr, wie beispielsweise einem beiderseits mit Kunststoff ummantelten Aluminiumrohr, mit
- einem einen oberflächenstrukturierten, beispielsweise gerillten Bereich aufweisenden Anschlußstutzen (2) für das Installationsrohr (8), auf den das Installationsrohr (8) aufschiebbar ist,
- einer über das Installationsrohr (8) schiebbaren Preßhülse (10),
- einem zum Verbinden des Anschlußstutzens (2) mit der Preßhülse (10) dienenden Verbindungselement,
- mindestens einem O-Ring (5) zum Abdichten der Verbindung zwischen dem Anschlußstutzen (2) und dem Installationsrohr (8), und
- einer Preßzange, mit der eine Verpressung zwischen der Preßhülse (10) und damit auch dem Installationsrohr (8) derart ausführbar ist, daß zwischen dem Installationsrohr (8) und dem oberflächenstrukturierten Bereich des Anschlußstutzens (2) mindestens eine in Umfangsrichtung des Installationsrohrs (8) verlaufene Preßfläche ausgebildet ist, wobei der mindestens eine O-Ring (5) unter einer Preßfläche (12) bzw. unmittelbar neben einer solchen Preßfläche (12) oder unmittelbar zwischen zwei Preßflächen in der Preßhülse (10) oder im Installationsrohr (8) angeordnet ist und eine durch den Anpreßdruck unter der Preßfläche (12) bewirkte, der zulässigen Verformung des O-Ringes (5) noch entsprechende Verformung aufweist, und/oder mindestens ein O-Ring (6) unverpreßt und elastisch verformbar zwischen dem Anschlußstutzen (2) und dem Installationsrohr (8) angeordnet ist,
dadurch gekennzeichnet, daß das Verbindungselement als Schnappring (9) ausgeführt ist, der einerseits eine Schnappverbindung mit der Preßhülse (10) bildet und andererseits eine zur Führung und Positionierung der Preßbacken (11) einer Preßzange geeignete Form aufweist, wobei der Schnappring eine zur Führung der Preßbacken (11) der Preßzange dienenden Kragen aufweist, der zur Führung und Positionierung der Preßbacken in einer tiefen Ringnut der Preßbacken zu liegen kommt.

2. Vorrichtung nach Anspruch 1, dadurch gekennzeichent, daß der Schnappring (9) Durchbrüche aufweist und/oder zumindest teilweise aus einem durchsichtigen Material besteht.

3. Vorrichtung nach Anspruch 1 oder 2, dadurch gekennzeichnet, daß mit dem Schnappring (9) die Stirnfläche des Installationsrohres (8) vom Rohrfitting ferngehalten wird.

4. Vorrichtung nach einem der vorhergehenden Ansprüche, dadurch gekennzeichnet, daß zwischen dem verpreßten O-Ring (5) und der verpreßten Oberflächenstruktur (Ringnuten 7) des Anschlußstutzens (2) ein weiterer O-Ring (6), vorzugsweise unverpreßt und elastisch verformbar angeordnet ist.

5. Vorrichtung nach einem der vorhergehenden Ansprüche, dadurch gekennzeichnet, daß der O-Ring (5) in einer Ringnut (3) angeordnet und diese beiderseits von je einer Ringnut begrenzt ist.

6. Vorrichtung nach einem der vorhergehenden Ansprüche, dadurch gekennzeichnet, daß die Preßfläche als kreiszylindrische Ringfläche gebildet ist.

## Claims

1. A device for producing a compressible pipe connection between a connecting piece of a pipe fitting and a conduit, such as an aluminium pipe covered on both sides with plastic, comprising
- a connecting piece (2) provided for the conduit (8) and having a surface-structured, e.g. grooved region, the conduit (8) being mountable on the connecting piece (2),
- a pressure sleeve (10) slidable over the conduit (8),
- a connecting member serving to connect the connecting piece (2) to the pressure sleeve (10),
- at least one O-ring (5) for sealing the connection between the connecting piece (2) and the conduit (8), and
- a pressure clamp, by means of which compression can take place between the pressure sleeve (10) and consequently also the conduit (8) in such a manner that at least one pressure surface extending in the circumferential direction of the conduit (8) is formed between the conduit (8) and the surface-structured region of the connecting piece (2), wherein the at least one O-ring (5) is arranged below a pressure surface (12) or directly adjacent to such a pressure surface (12) or directly between two pressure surfaces in the pressure sleeve (10) or in the conduit (8) and has deformation caused by the pressure below the pressure surface (12) and corresponding to the admissible deformation of the O-ring (5), and/or at least one non-compressed and elastically deformable O-ring (6) is arranged between the connecting piece (2) and the conduit (8),
characterised in that the connecting member is formed as a snap ring (9) which on the one hand forms a snap-locking connection to the pressure sleeve (10) and on the other hand has a shape suitable for guiding and positioning the pressure jaws (11) of a pressure clamp, wherein the snap ring has a collar serving to guide the pressure jaws (11) of the pressure clamp and being arranged in a deep annular groove in the pressure jaws for the guiding and positioning thereof.

2. A device according to claim 1, characterised in that the snap ring (9) has openings and/or at least partly comprises a transparent material.

3. A device according to claim 1 or 2, characterised in that the end surface of the conduit (8) is held apart from the pipe fitting by the snap ring (9).

4. A device according to any one of the preceding claims, characterised in that a further, preferably non-compressed and elastically deformable O-ring (6) is arranged between the compressed O-ring (5) and the compressed surface structure (annular grooves 7).

5. A device according to any one of the preceding claims, characterised in that the O-ring (5) is arranged in an annular groove (3) bounded on either side by a further annular groove.

6. A device according to any one of the preceding claims, characterised in that the pressure surface is formed as a circular cylindrical annular surface.

## Revendications

1. Dispositif pour l'établissement d'un assemblage tubulaire compressible entre un raccord d'une robinetterie tubulaire et un tube d'installation, comme par exemple un tube en aluminium revêtu des deux côtés de matière synthétique, avec
- un raccord (2) dont la surface est structurée, présentant par exemple une zone rainurée pour le tube d'installation (8), sur lequel le tube d'installation (8) peut être poussé,
- un manchon de compression (10) pouvant être poussé sur le tube d'installation (8),
- un élément d'assemblage servant à l'assemblage du raccord (2) avec le manchon de compression (10),
- au moins un joint torique (5) pour rendre étanche l'assemblage entre le raccord (2) et le tube d'installation (8) et
- une pince de compression au moyen de laquelle une compression peut être réalisée entre le manchon de compression (10) et donc également le tube d'installation (8) de façon que soit formée entre le tube d'installation (8) et la zone à surface structurée du raccord (2) au moins une face de pression s'étendant dans la direction périphérique du tube d'installation (8), où au moins un joint torique (5) précité est disposé sous une face de compression (12) respectivement directement à côté d'une telle face de compression (12) ou directement entre deux faces de compression dans le manchon de compression (10) ou dans le tube d'installation (8) et présente une déformation provoquée par la pression d'application sous la face de pression (12), correspondant encore à la déformation autorisée du joint torique (5), et/ou au moins un joint torique (6) est disposé sans être comprimé et d'une manière déformable élastiquement entre le raccord (2) et le tube d'installation (8),
caractérisé en ce que l'élément d'assemblage est réalisé sous forme de bague à enclenchement (9) qui réalisé, d'une part, un assemblage à enclenchement avec le manchon de compression (10) et qui possède, d'autre part, une forme qui convient pour le guidage et le positionnement des mâchoires de compression (11) d'une pince de compression, où la bague à enclenchement présente une collerette servant au guidage des mâchoires de compression (11) de la pince de compression qui, pour le guidage et le positionnement des mâchoires de compression, vient à se situer dans une rainure annulaire profonde des mâchoires de compression.

2. Dispositif selon la revendication 1, caractérisé en ce que la bague à enclenchement (9) présente des perçages et/ou est constituée au moins partiellement d'un matériau transparent.

3. Dispositif selon la revendication 1 ou 2, caractérisé en ce qu'au moyen de la bague à enclenchement (9), la face frontale du tube d'installation (8) est maintenue à distance de la robinetterie tubulaire.

4. Dispositif selon l'une des revendications précédentes, caractérisé en ce qu'il est disposé entre le joint torique comprimé (5) et la structure de surface comprimée (rainures annulaires 7) du raccord (2) un joint torique additionnel (6), de préférence non comprimé et déformable élastiquement.

5. Dispositif selon l'une des revendications précédentes, caractérisé en ce que le joint torique (5) est disposé dans une rainure annulaire (3) et en ce que celle-ci est délimitée de part de d'autre respectivement par une rainure annulaire.

6. Dispositif selon l'une des revendications précédentes, caractérisé en ce que la face de compression est réalisée comme face annulaire cylindrique circulaire.
